# EUROPEAN PATENT APPLICATION

(11) **EP 4 177 230 A1**
(43) Date of publication of application: **10.05.2023**
(21) Application number: 21206152.7
(22) Date of filing: 03.11.2021
(51) Int. Cl.: C04B 26/16, C04B 111/28

(54) **COMPOSITION FOR THERMAL INSULATION**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a thermal insulation material and a preparation process thereof, and an article comprising the thermal insulation material. The thermal insulation material is made of raw materials containing the following components: 30wt%-70wt% of expanded perlite; 10 wt%-50 wt% of aqueous polyurethane dispersion; 3 wt%-25 wt% of expandable graphite; 0-15 wt% of halogen-free flame retardant; and 0.2 wt%-3 wt% of polysiloxane water repellent; the total weight of component c and component d is 5wt%-40wt%, the above-mentioned amounts are all relative to the total weight of said raw materials; said aqueous polyurethane dispersion comprises a polyurethane polymer and water, said polyurethane polymer has a melting enthalpy of greater than 3 J/g, and the melting enthalpy is measured in the range of 20°C-100°C of the first temperature-rise curve through the DSC measurement in accordance with DIN65467:1999. The thermal insulation material of the present invention has good mechanical strength, thermal insulation performance, and flame retardancy.

## Description

### Technical Field

The present invention relates to a thermal insulation material and a preparation process thereof, and an article containing the thermal insulation material.

### Background technology

With the vigorous development of the construction industry and the modernization of buildings, the consumption of thermal-protective material (also called thermal insulation plate and thermal insulation material) in construction engineering has increased year by year. External wall thermal insulation can effectively block the conduction of heat energy, and the thermal insulation effect is very remarkable. It can not only save the heating cost in winter but also is more environmentally friendly than other heating methods.

The thermal-protective material currently used in our country mainly comprises an organic thermal-protective material and an inorganic thermal-protective material. The organic thermal-protective material has good thermal insulation and energy-saving performance but is flammable; and the inorganic thermal-protective material is safe and reliable but has poor thermal-protective performance. Polyurethane rigid foam thermal-protective material is a novel composite material with thermal insulation, heat preservation, and waterproof functions. Its thermal conductivity is low, only 0.022-0.033W/(m^{∗}K), which is equivalent to half of the extruded sheet, and much lower than that of Class A flame retardancy thermal-protective material. It has the lowest thermal conductivity among the current thermal-protective materials and can be applied to the building external wall for thermal insulation and heat preservation. However, the polyurethane rigid foam thermal-protective material is an organic thermal-protective material, and its highest flame retardancy can only be equal to or less than Class B1 in accordance with GB8624-2016 "Classification on burning behavior for building materials", and cannot meet the Class A flame retardancy requirements of the thermal-protective material in the construction industry.

CN108239254B discloses an all-water foaming Class B1 flame-retardant polyurethane foam thermal-protective material and a preparation process thereof. Specifically, there is disclosed a Class B1 flame retardant reaction system of a polyol system (containing an oligomeric phosphate diol etherified amino resin polyol-based combined polyether, and flame retardant, fire retardant chemical, emulsifier, foaming agent, catalyst, and antisettling agent) and a polymeric diphenylmethane diisocyanate, having an oxygen index for burning of about 30, which cannot meet the flame retardant requirements of the Class A thermal insulation material in the construction industry.

At present, the common Class A flame-retardancy thermal-protective materials on the market include foamed cement board, vacuum insulation plate, foam glass, glass wool, inorganic insulation mortar, rock wool board, foamed ceramic board, and the like. Foamed cement board has excellent thermal-protective performance, but has a high water absorption rate, poor long-term weather resistance, and is prone to collapse problems. The vacuum degree of the vacuum insulation plate is difficult to maintain. Once it is damaged, the insulation performance of the plate will drop sharply. In addition, the existing construction technology leads to too many plate joints and thermal bridges, which causes a great risk of moisture condensation. The thermal conductivity of foam glass is 0.062W/(m^{∗}K), and the efficiency of heat preservation and thermal insulation is low, and the cost is expensive. Glass wool has good thermal-protective properties, but its acidity coefficient is ≤1.6. It cannot be plastered and cannot meet the requirements for external wall thermal-protective systems. The thermal conductivity of the inorganic insulation mortar is 0.070W/(m^{∗}K), the efficiency for heat preservation and thermal insulation is low, and the construction is difficult. Rock wool broad has excellent thermal-protective properties and fire resistance, but its strength itself is low and it has poor waterproof performance and poor material stability. The foamed ceramic broad is not flammable, but its thermal conductivity is 0.055W/(m^{∗}K), and the efficiency for heat preservation and thermal insulation is low.

The expanded perlite thermal-protective material prepared by using water glass as the adhesive has become a popular product in the thermal-protective material field due to its low cost, simple production process, and good thermal-protective effect. However, the expanded perlite thermal-protective material prepared with water glass as adhesive itself has a high concentration of sodium ions, which will cause the Si-O-Si bond that plays an adhesive role to be reversibly degraded, thereby the thermal-protective material has a relatively large loss in the mechanical strength after a period of use, resulting in poor weather resistance. The degradation of the Si-O-Si bond will also cause sodium ions to migrate to the outside of the wall, causing an alkali return phenomenon to appear on the wall surface, and the wall will appear mottled or even fall off.

CN105948642B discloses a hydrophobically-modified expanded perlite thermal-protective material, including cement, fly ash, propyltrimethoxysilane, polyacrylate emulsion, modified expanded perlite, sodium dodecylbenzene sulfonate, additives, quicklime, PP fiber hydroxypropyl methylcellulose, bentonite, and the like. The processing of the thermal-protective material is complicated, time-consuming, and low in production efficiency. The flame-retardant level of the thermal-protective material is Class A, and the thermal conductivity is 0.050W/m^{∗}K, that is, the efficiency for heat preservation and thermal insulation is low.

CN106045459B discloses an expanded perlite thermal-protective material prepared by using a polymetallic phosphoric acid adhesive. Multimetal phosphate adhesives are based on aluminum hydroxide, Group IIA metal oxides, and transition metal oxides. Polymer emulsions such as styrene-acrylic emulsion, JS emulsion, emulsified asphalt, or modified acrylic emulsion are used as adhesives. The expanded perlite thermal-protective material has the flame retardancy level of Class A, low bond strength, and thermal conductivity of 0.060W/m^{∗}K, and the efficiency for heat preservation and thermal insulation is low.

CN105948637B discloses a fiber-reinforced modified expanded perlite thermal-protective material and a production process thereof. Cement, fly ash, PP fiber, and other organic or inorganic substances and industrial and mining waste materials are used as raw materials for the modified expanded perlite thermal-protective material, and heated to 1000-1300°C for expansion treatment followed by spraying siloxane for hydrophobic treatment. The produced modified expanded perlite thermal-protective material has a flame retardancy level of Class A, relatively low bond strength, and thermal conductivity is 0.051 W/(m^{∗}K), and the efficiency for heat preservation and thermal insulation is low.

It is desirable to develop a new thermal-protective material having better flame retardancy and thermal insulation performance.

### Summary of the Invention

The purpose of the present invention is to provide a thermal insulation material and a preparation process thereof, and an article containing the thermal insulation material.

The thermal insulation material according to the present invention is made of raw materials containing the following components:
a. 30wt%-70wt% of expanded perlite;
b. 10wt%-50wt% of an aqueous polyurethane dispersion;
c. 3wt%-25wt% of expandable graphite;
d. 0-15 wt% of a halogen-free flame retardant; and
e. 0.2wt%-3wt% of a polysiloxane water repellent;
the total weight of component c and component d is 5wt%-40wt%, the above-mentioned amounts are all relative to the total weight of said raw materials; said aqueous polyurethane dispersion comprises a polyurethane polymer and water, said polyurethane polymer has a melting enthalpy of greater than 3 J/g, and the melting enthalpy is measured in the range of 20°C-100°C of the first temperature-rise curve through the DSC measurement in accordance with DIN65467:1999.

According to one aspect of the present invention, a method for preparing the thermal insulation material provided by the present invention is provided, wherein component a) expanded perlite, component b) aqueous polyurethane dispersion, component c) expandable graphite, component d) halogen-free flame retardant and component e) polysiloxane water repellent are mixed in any manner and dried to obtain the thermal insulation material.

According to another aspect of the present invention, there is provided an article comprising the thermal insulation material provided according to the present invention.

The thermal insulation material of the present invention has low density, low thermal conductivity, high water repellency and high oxygen index, and the thermal insulation material does not break after being burned by fire. The thermal insulation material of the present invention has good mechanical strength, flame retardancy and thermal insulation performance.

### Detailed description

The present invention provides a thermal insulation material made of raw materials containing the following components: a. 30wt%-70wt% of expanded perlite; b. 10wt%-50wt% of an aqueous polyurethane dispersion; c. 3wt%-25wt% of expandable graphite; d. 0-15 wt% of a halogen-free flame retardant; and e. 0.2wt%-3wt% of a polysiloxane water repellent; the total weight of component c and component d is 5wt%-40wt%, the above-mentioned amounts are all relative to the total weight of said raw materials; said aqueous polyurethane dispersion comprises a polyurethane polymer and water, said polyurethane polymer has a melting enthalpy of greater than 3 J/g, and the melting enthalpy is measured in the range of 20°C-100°C of the first temperature-rise curve through the DSC measurement in accordance with DIN65467:1999. The present invention also provides a preparation process of the thermal insulation material and an article containing the thermal insulation material.

The solid of the dispersion of the present invention refers to the solid component of the dispersion or the effective component of the dispersion.

### Thermal insulation material

The thermal insulation material preferably at least meets one of the following characteristics:
A. Density of 110kg/m³-200kg/m³, measured in accordance of GB/T 5486-2008;
B. Thermal conductivity of 30-46 mw/mk, measured in accordance with GB/T 10294-2008; and
C. Oxygen index of not less than 43, measured in accordance with GB/T2406.2-2009.

The thermal insulation material has an oxygen index of most preferably 43-100, measured in accordance with GB/T2406.2-2009.

The thermal insulation material has a hydrophobicity of preferably 95%-100%, measured in accordance to GB/T 10299-2011.

### Component a) expanded perlite

The expanded perlite of the present invention is a natural acidic vitreous volcanic lava and it is a non-metallic mineral.

Preferably, the expanded perlite is derived from one or more of the following: perlite, retinite, and obsidian.

The expanded perlite is preferably perlite sand.

The expanded perlite preferably at least meets one of the following characteristics:
i. Volume-expansion coefficient of 4-50, measured in accordance to "JC/T 209-2012 Standard";
ii. Density of 30 kg/m³-120 kg/m³, measured in accordance of JC/T209-2012;
iii. Thermal conductivity of 20 mW/mK-70 mW/mK, further preferably 20 mW/mK-60 mW/mK, most preferably 20 mW/mK-50 mW/mK, measured in accordance with GB/T 10294 or GB/T 10295;
iv. Product hydrophobicity of not less than 95%, measured in accordance to GB/T 10299; and
v. Closed porosity of less than 10%, measured in accordance of JC/T 1042-2007 Appendix D.

The expanded perlite has a volume-expansion coefficient of most preferably 20-50, measured in accordance to "JC/T 209-2012 Standard".

The test method for the volume-expansion coefficient of the expanded perlite is as follows: Taking 5mL of expanded perlite in a 30mL porcelain crucible, placing it in a high temperature furnace that has been preheated to 250°C-450°C and preheating it for 8-20 minutes, and taking out the expanded perlite and cooling it, recording the volume of the expanded perlite as V1, then quickly pouring it into a 1000°C porcelain evaporating dish, immediately putting it back into the high-temperature furnace for 10-20 seconds, cooling after expansion, and transferring the expanded perlite into a 10mL graduated cylinder, vibrating up and down to make it no longer change, recording the volume of the expanded perlite as V2, and the volume expansion coefficient = V2/V1.

The amount of the expanded perlite is preferably 40wt%-66wt%, relative to the total weight of said raw materials.

### Component b) aqueous polyurethane dispersion

Said aqueous polyurethane dispersion is preferably one or more of the following: an anionic aqueous polyurethane dispersion and a non-ionic aqueous polyurethane dispersion, most preferably an anionic aqueous polyurethane dispersion.

The anionic aqueous polyurethane dispersion contains a hydrophilic anionic group. The amount of said hydrophilic anionic group is preferably 0.1 milligram equivalents/100g polyurethane solid to 15 milligram equivalents/100g polyurethane solid, most preferably 1.6 milligram equivalents/100g polyurethane solid to 14 milligram equivalents/100g polyurethane solid.

The residual content of the organic solvent in said aqueous polyurethane dispersion is preferably less than 1.0 wt%, relative to the total weight of said aqueous polyurethane dispersion.

Said aqueous polyurethane dispersion comprises a polyurethane polymer and water, said polyurethane polymer has a melting enthalpy of preferably 20J/g-100J/g, most preferably 30 J/g-50 J/g, and the melting enthalpy is measured in the range of 20°C-100°C of the first temperature-rise curve through the DSC measurement in accordance with DIN65467:1999.

The amount of said aqueous polyurethane dispersion is preferably 14wt%-50wt%, most preferably 18wt%-40wt%, relative to the total weight of said raw materials.

The solid content of said aqueous polyurethane dispersion is preferably 10 wt%-70 wt%, further preferably 40 wt%-65 wt%, most preferably 40 wt%-55 wt%, relative to the total weight of said aqueous polyurethane dispersion.

Said aqueous polyurethane dispersion has a lowest thermal activation temperature of the adhesive layer of preferably 40°C-120°C, most preferably 50°C-100°C.

Said aqueous polyurethane dispersion can be added to the raw material in the form of a dispersion or can be obtained by being added in the form of a solid polyurethane polymer and water and then mixed, and most preferably directly added in the form of a dispersion.

### Component c) expandable graphite

The expandable graphite preferably at least meets one of the following characteristics:
I. particle size of 50 mesh-350 mesh, further preferably 50 mesh-200 mesh, most preferably 50 mesh-100 mesh, measured in accordance with GB T 3520-2008 graphite fineness test method; and
II. Expansion ratio of 50-500 and the expansion ratio is measured in accordance with GB 10698-1989.

The amount of the expandable graphite is preferably 5wt% to 25wt%, relative to the total weight of said raw materials.

### Component d) halogen-free flame retardant

The halogen-free flame retardant is preferably a phosphorus-containing flame retardant, further preferably a powdered intumescent phosphorus-containing flame retardant, and most preferably an ammonium polyphosphate.

The amount of the halogen-free flame retardant is preferably 0-12.5wt%, relative to the total weight of said raw materials.

The total weight of component c and component d is preferably 5.5wt% to 37wt%, relative to the total weight of said raw materials.

### Component e) polysiloxane water repellent

The polysiloxane water repellent is most preferably a powdered polysiloxane water repellent.

The amount of the polysiloxane water repellent is preferably 0.5wt% to 2.5wt%, relative to the total weight of said raw materials.

### Preparation process

The drying temperature is most preferably 60°C to 120°C.

The process for preparing the thermal insulation material is preferably as follows: mixing component a) expanded perlite, component b) aqueous polyurethane dispersion, component c) expandable graphite, component d) halogen-free flame retardant and component e) polysiloxane water repellent in any manner, stirring evenly to obtain a mixture, putting the mixture into a mold cavity (in which the pressure and the temperature can be increased), gradually vibrating and pressurizing to compact the mixture and discharge the gas in the mixture, and then gradually raising the temperature of the mold cavity up to 60°C to 120°C to obtain a thermal insulation material with a moisture content of less than 3%, and taking out the thermal insulation material from the mold cavity.

### Article

The article are mainly structural products of current industrial products, and preferably preformed building structural members.

### Examples

Unless defined otherwise, all technical and scientific terms used herein have the same meanings as commonly understood by those skilled in the art to which this invention belongs. To the extent that the definitions of terms used in this specification conflict with meanings commonly understood by those skilled in the art to which this invention belongs, the definitions set forth herein prevail.

Unless otherwise indicated, all numbers expressing quantities of ingredients, reaction conditions, and the like used in the specification and claims are to be understood as being modified by the term "about". Accordingly, unless indicated to the contrary, the numerical parameters set forth herein are approximations that can vary depending upon the desired properties to be obtained.

The expression "and/or" as used herein means one or all of the mentioned elements.

The use of "comprise" and "contain" herein encompasses the presence of the mentioned elements alone and the presence of other elements not mentioned in addition to the mentioned elements.

All percentages in the present invention are by weight unless otherwise stated.

The analyses and measurements of the present invention are all carried out at 23±2°C unless otherwise stated.

The oxygen index of the thermal insulation material is measured in accordance with GB/T2406.2-2009, and the qualified value is not less than 43. The higher the oxygen index is, the better the flame retardancy is.

The density of the thermal insulation material is measured in accordance with GB/T 5486-2008, and the qualified value is not higher than 200 kg/m³. The lower the density is, the lighter the material is.

The thermal conductivity of the thermal insulation material is measured in accordance with GB/T 10294-2008, and the qualified value is not higher than 46 (mW/mK) at 25°C. The lower the thermal conductivity is, the better the thermal insulation performance of the material is.

The fire burning test of the thermal insulation material is carried out in accordance with GB 8624-2012 Class A test. If not broken after the fire burning, the thermal insulation material is qualified, otherwise, it is unqualified.

The hydrophobicity of the thermal insulation material is measured in accordance with GB/T 10299-2011, and the qualified value is not less than 95%. The higher the hydrophobicity is, the better the thermal insulation performance of the material is.

### Raw materials and Reagents

Desmodur 44V20: Polymeric diphenylmethane diisocyanate PMDI, NCO content 30.5%-31.5%, viscosity 140-260 mPa·s.
Baymer 48BA003: polyurethane liquid composition.
Baymer BJ3-5603: polyurethane liquid composition.
Dispercoll U42: an aqueous polyurethane dispersion with a melting enthalpy of less than 3J/g, a solid content of 48-52wt%, and a lowest thermal activation temperature of the adhesive layer of 80°C-100°C, and commercially available from Covestro.
Dispercoll U58: an aqueous polyurethane dispersion with a melting enthalpy of 40.06 J/g, a solid content of 50±1wt%, and a lowest thermal activation temperature of the adhesive layer of 50°C-70°C, and commercially available from Covestro.
Dispercoll U54: an aqueous polyurethane dispersion with a melting enthalpy of 37.60 J/g, a solid content of 50±1wt%, and a lowest thermal activation temperature of the adhesive layer of 60°C-70°C, and commercially available from Covestro.
Dispercoll U56: an aqueous polyurethane dispersion with a melting enthalpy of 44.00 J/g, a solid content of 49-51wt%, and a lowest thermal activation temperature of the adhesive layer of 55°C-65°C, and commercially available from Covestro.
Dispercoll U8755: an aqueous polyurethane dispersion with a melting enthalpy of 39.68 J/g, a solid content of 45wt%, and a lowest thermal activation temperature of the adhesive layer of 80°C-100°C, and commercially available from Covestro.
Dispercoll U62: an aqueous polyurethane dispersion with a melting enthalpy of 37.25 J/g, a solid content of 50±1wt%, and a lowest thermal activation temperature of the adhesive layer of 50°C-70°C, and commercially available from Covestro.
Dispercoll U 53: an aqueous polyurethane dispersion with a melting enthalpy of 41.55 J/g, a solid content of 40wt%, and a lowest thermal activation temperature of the adhesive layer of 60°C-70°C, and commercially available from Covestro.
100# expanded perlite: volume expansion coefficient: 25, density: 90-120kg/m³, thermal conductivity: 25-27mW/mK, closed porosity: <10%, commercially available from Xinyang Zhongkai thermal insulation material Co., Ltd.
SP-60: perlite sand with volume-expansion coefficient of 40, density of 60 kg/m³, thermal conductivity of 23-26 mW/mK, and closed porosity of <10%, and commercially available from Xinyang Zhongkai thermal insulation material Co., Ltd.
EG-E300: expandable graphite with purity of 95%-99%, particle size of 50 mesh-80 mesh, the expansion ratio of >300mL/g, and commercially available from Qingdao Rock Sea carbon material Co. Ltd..
EG-X200: expandable graphite with purity of 95%-99%, particle size of 50 mesh-80 mesh, the expansion ratio of >230mL/g, and commercially available from Qingdao Rock Sea carbon material Co. Ltd..
EXOLIT AP 428: ammonium polyphosphate, commercially available from Clariant.
EXOLIT AP 422: ammonium polyphosphate, commercially available from Clariant.
SPH60+: polysiloxane water repellent, commercially available from Dow Corning.
SPH50: Polysiloxane water repellent, commercially available from Dow Corning.
Z6683: Polysiloxane water repellent, commercially available from Dow Corning, and the Z6683 used in the examples of the present invention is an emulsion obtained by mixing Z6683 and deionized water in a mass ratio of 1:7.

Table 1, table 2, and table 3 show the compositions of raw materials for the thermal insulation materials of Examples and Comparative Examples of the present invention and the performance testing results of the thermal insulation materials, including product density, thermal conductivity, oxygen index, structure broken after being burned by fire or not, and hydrophobicity.

### Preparation of thermal insulation materials of Examples 1-18 and Comparative Examples 5-12

According to the amounts shown in table 1, table 2 or table 3, expanded perlite, expandable graphite, flame retardant, and water repellent were weighed and placed into a plastic cup, and the mixture was gently stirred with a stirring rod for about 5 minutes until the mixture became uniform to obtain a powder substance;
An appropriate amount of deionized water was added to moisten the surface of the powder substance, and the powder substance was stirred with a stirring rod for about 5 minutes to a state where the powder substance was slightly moistened and the stirring could not cause the dust anymore;
According to the amounts shown in table 1, table 2, or table 3, the aqueous polyurethane dispersion was added, and intensively stirred so that the aqueous polyurethane dispersion was uniformly dispersed on the surface of the powder substance to form a mixture;
The mixture was poured into a square mold, and the mold was flattened with a spatula, compacted, and then put in a vacuum oven that had been preheated to 90°C-120°C, and heat-dried until the water content of the mixture was less than 3%.

### Preparation of the thermal insulation materials of Comparative Examples 1-2

According to the amounts shown in table 1, the liquid composition and Desmodur 44V20 were mixed to obtain a mixture;
The mixture was poured into a square mold, and the mold was flattened with a spatula, compacted, and then put in a vacuum oven that had been preheated to 90°C-120°C, and heat-dried until the water content of the mixture was less than 3% to obtain the thermal insulation material of Comparative Example.

### Preparation of the thermal insulation material of Comparative Examples 3-4

According to the amounts shown in table 1, expanded perlite was weighed and placed into a plastic cup, and it was gently stirred with a stirring rod for about 5 minutes until it became uniform to obtain a powder substance;
An appropriate amount of deionized water was added to moisten the surface of the powder substance, and the powder substance was stirred with a stirring rod for about 5 minutes to a state where the powder substance was slightly moistened and the stirring could not cause the dust anymore.

According to the amounts shown in table 1, the liquid composition and Desmodur 44V20 were added and mixed to obtain a mixture;
The mixture was poured into a square mold, and the mold was flattened with a spatula, compacted, and then put in a vacuum oven that had been preheated to 90°C-120°C, and heat-dried until the water content of the mixture was less than 3% to obtain the thermal insulation material of Comparative Example.

**Table 1: Compositions of raw materials for thermal insulation materials of Examples 1-8 and Comparative Examples 1-7 and performance test results**

| Composition of raw materials/g | Comparative Examples | | | | | | | Examples | | | | | | | |
|---|---|---|---|---|---|---|---|---|---|---|---|---|---|---|---|
| | 1 | 2 | 3 | 4 | 5 | 6 | 7 | 1 | 2 | 3 | 4 | 5 | 6 | 7 | 8 |
| Baymer 48BA003 | 100 | - | 100 | - | - | - | - | - | - | - | - | - | - | - | - |
| Baymer BJ3-5603 | - | 100 | - | 100 | - | - | - | - | - | - | - | - | - | - | - |
| Desmodur 44V20 | 100 | 100 | 100 | 100 | - | - | - | - | - | - | - | - | - | - | - |
| SP-60 | - | - | - | 30 | 68 | 75.5 | 66 | 66 | 49.6 | 36.8 | 44.1 | - | - | - | - |
| 100# expanded perlite | - | - | 30 | - | - | - | - | - | - | - | - | 63.5 | 56.8 | 49.3 | 40.0 |
| Dispercoll U 42 | - | - | - | - | - | - | 28 | - | - | - | - | - | - | - | - |
| Dispercoll U58 | - | - | - | - | 31.5 | 8 | - | 28 | 28 | 31.5 | 18.7 | 20 | 14.1 | 25.3 | 40 |
| EG-E300 | - | - | - | - | - | 8 | 5.5 | 5.5 | 14.0 | 20.7 | 24.6 | 11 | 19.10 | 16.6 | 12.8 |
| EXOLIT AP 428 | - | - | - | - | - | 8 | - | - | 7.9 | 10.5 | 12.1 | 5 | 9.50 | 8.3 | 6.7 |
| SPH60+ | - | - | - | - | 0.5 | 0.5 | 0.5 | 0.5 | 0.5 | 0.5 | 0.5 | 0.5 | 0.5 | 0.5 | 0.5 |
| Total weight/g | 200.0 | 200.0 | 230.0 | 230.0 | 100.0 | 100.0 | 100.0 | 100.0 | 100.0 | 100.0 | 100.0 | 100.0 | 100.0 | 100.0 | 100.0 |
| Performance tests of thermal insulation material | | | | | | | | | | | | | | | |
| Density/ kg/m³ | 55 | 55 | 80 | 80 | 130 | Not Molded | Molded but too soft | 130 | 130 | 130 | 130 | 130 | 130 | 130 | 130 |
| Thermal conductivity / mW/mK | 20.9 | 20.9 | 30 | 28 | 45 | | | 40 | 38 | 41 | 44 | 39 | 42 | 45 | 42 |
| Oxygen index | 32 | 27 | 34 | 34 | 36 | | | 43 | > 50 | > 50 | > 50 | > 50 | > 50 | > 50 | > 50 |
| Structure broken after being burned by fire or not | Yes | Yes | Yes | Yes | Yes | | | No | No | No | No | No | No | No | No |

The combination of Baymer48BA003 and Desmodur44V20 used in Comparative Example 1 was a polyurethane rigid foam thermal insulation system, and the thermal insulation material obtained therefrom had a low oxygen index and the material structure was broken after being burned by fire.

The combination of BaymerBJ3-5603 and Desmodur44V20 used in Comparative Example 2 was a polyurethane rigid foam thermal insulation system, and the thermal insulation material obtained therefrom had a low oxygen index and the material structure was broken after being burned by fire.

In Comparative Example 3, expanded perlite was added to a polyurethane rigid foam thermal insulation system from Baymer48BA003 and Desmodur44V20, and the thermal insulation material obtained therefrom had a low oxygen index and the material structure was broken after being burned by fire.

In Comparative Example 4, perlite sand was added to a polyurethane rigid foam thermal insulation system from BaymerBJ3-5603 and Desmodur44V20, and the thermal insulation material obtained therefrom had a low oxygen index and the material structure was broken after being burned by fire.

The raw material system of Comparative Example 5 contained perlite sand, Dispercoll U58, and polysiloxane water repellent, and the thermal insulation material obtained therefrom had a low oxygen index and the material structure was broken after being burned by fire.

The raw material system of Comparative Example 6 contained 75.5wt% of perlite sand and 8wt% of Dispercoll U58, which could not produce a molded thermal insulation material, and the performance testing could not be performed.

Dispercoll U42 contained in the raw material system of Comparative Example 7 had a melting enthalpy of less than 3 J/g, and a thermal insulation material could be formed therefrom, but the obtained material was too soft to carry out the performance testing.

The density, the thermal conductivity, and the oxygen index of the thermal insulation materials of Examples 1-8 of the present invention could all meet the requirements, and the materials did not break and collapse after being burned by fire, and the fire would extinguish after the materials left the fire. Therefore, the thermal insulation material of Examples of the present invention had good mechanical strength, thermal insulation performance, and flame retardancy.

**Table 2: Compositions of raw materials for thermal insulation materials of Examples 9-14 and Comparative Examples 8-9 and performance test results**

| Composition of raw materials/g | Comparative Examples | | Examples | | | | | |
|---|---|---|---|---|---|---|---|---|
| | 8 | 9 | 9 | 10 | 11 | 12 | 13 | 14 |
| SP-60 | 30 | 79.5 | 59.5 | 59.5 | 59.5 | 59.5 | 59.5 | 59.5 |
| Dispercoll U54 | - | - | 28 | - | - | - | - | - |
| Dispercoll U58 | 57.5 | 20 | - | 28 | - | - | - | - |
| Dispercoll U56 | - | - | - | - | 28 | - | - | - |
| Dispercoll U8755 | - | - | - | - | | 28 | - | - |
| Dispercoll U62 | - | - | - | - | - | - | 28 | - |
| Dispercoll U53 | - | - | - | - | - | - | - | 28 |
| EG-E300 | 6.0 | - | 6.0 | 6.0 | 6.0 | 6.0 | 6.0 | 6.0 |
| SPH60+ | 0.5 | 0.5 | 0.5 | 0.5 | 0.5 | 0.5 | 0.5 | 0.5 |
| EXOLIT AP 422 | 6.0 | | 6.0 | 6.0 | 6.0 | 6.0 | 6.0 | 6.0 |
| Total weight/g | 100.0 | 100.0 | 100.0 | 100.0 | 100.0 | 100.0 | 100.0 | 100.0 |
| Performance tests of thermal insulation material | | | | | | | | |
| Density/kg/m³ | 130 | Not molded | 130 | 130 | 130 | 130 | 130 | 130 |
| Oxygen index | 34 | | > 50 | > 50 | > 50 | > 50 | > 50 | > 50 |
| Thermal conductivity /mW/mK | 42 | | 43 | 43 | 40 | 42 | 43 | 42 |
| Structure broken after | Yes | | No | No | No | No | No | No |
| being burned by fire or not | | | | | | | | |

The raw material of Comparative Example 8 contained 57.5 wt% of aqueous polyurethane dispersion, and the formed thermal insulation materials had a low oxygen index and the material structure was broken after being burned by fire.

The raw material of Comparative Example 9 was free of expandable graphite and the content of perlite sand was 79.5wt%, and it could not produce a molded thermal insulation material, and the performance testing could not be performed.

The raw materials of Examples 9-14 contained different aqueous polyurethane dispersions, the density, the thermal conductivity, and the oxygen index of the formed thermal insulation materials could all meet the requirements, and the materials did not break and collapse after being burned by fire, and the fire would extinguish after the materials left the fire. Therefore, the thermal insulation material of Examples of the present invention had good mechanical strength, thermal insulation performance, and flame retardancy.

**Table 3: Compositions of raw materials for thermal insulation materials of Examples 15-18 and Comparative Examples 10-12 and performance test results**

| Composition of raw materials/g | Comparative Examples | | | Examples | | | |
|---|---|---|---|---|---|---|---|
| | 10 | 11 | 12 | 15 | 16 | 17 | 18 |
| SP-60 | 70 | 47 | 62 | 59.5 | 57.5 | 59.5 | 59 |
| Dispercoll U58 | 27 | 28 | 28 | 28 | 28 | 28 | 28 |
| SPH50 | - | - | - | 0.5 | 2.5 | | |
| SPH60+ | - | - | - | - | - | 0.5 | |
| Z6683 | - | - | - | - | - | - | 1 |
| EG-X200 | - | - | - | - | - | | - |
| EG-E300 | 3 | 25 | - | 6.0 | 6.0 | 6.0 | 6.0 |
| EXOLIT AP 422 | - | - | 10 | 6.0 | 6.0 | 6.0 | 6.0 |
| Total weight/g | 100.0 | 100.0 | 100.0 | 100.0 | 100.0 | 100.0 | 100.0 |
| Performance tests of thermal insulation material | | | | | | | |
| Density/kg/m³ | 130 | 130 | Not molded | 130 | 130 | 130 | 130 |
| Hydrophobicity /% | 80 | 80 | | 95 | 99 | 99 | 99 |
| Oxygen index | 26 | > 50 | | > 50 | > 50 | > 50 | > 50 |
| Thermal conductivity /mW/mK | 43 | 59 | | 40 | 42 | 43 | 42 |
| Structure broken after being burned by fire or not | Yes | No | | No | No | No | No |

The raw materials of Comparative Examples 10-11 were free of polysiloxane water repellent, and the formed thermal insulation materials could not balance the oxygen index, the thermal conductivity and the fire burning performance, and the thermal insulation materials had low hydrophobicity.

The raw material of Comparative Example 12 was free of polysiloxane water repellent and expandable graphite, and it could not produce a molded thermal insulation material, and the performance testing could not be performed.

The raw materials of Examples 15-18 contained different polysiloxane water repellents, the density, the thermal conductivity, and the oxygen index of the formed thermal insulation materials could all meet the requirements, and the materials did not break and collapse after being burned by fire, and the fire would extinguish after the materials left the fire. Therefore, the thermal insulation material of Examples of the present invention had good mechanical strength, thermal insulation performance, and flame retardancy. Moreover, the thermal insulation materials of Examples 15-18 had high hydrophobicity, and the thermal insulation performance of the thermal insulation materials was good.

It will be evident to those skilled in the art that the present invention is not limited to the details set forth, and that the present invention may be embodied in other specific forms without departing from the spirit or essential characteristics thereof. The present embodiments are therefore to be considered in all respects as illustrative and not limiting, and thereby the scope of the present invention is indicated by the appended claims rather than by the foregoing description; and moreover, any changes, as long as it falls within the meaning and range of the equivalence to the claims, should be considered as a part of the present invention.

## Claims

1. A thermal insulation material, which is made of raw materials containing the following components:
a. 30wt%-70wt% of expanded perlite;
b. 10wt%-50wt% of an aqueous polyurethane dispersion;
c. 3wt%-25wt% of expandable graphite;
d. 0-15 wt% of a halogen-free flame retardant; and
e. 0.2wt%-3wt% of a polysiloxane water repellent;
the total weight of component c and component d is 5wt%-40wt%, the above-mentioned amounts are all relative to the total weight of said raw materials; said aqueous polyurethane dispersion comprises a polyurethane polymer and water; said polyurethane polymer has a melting enthalpy of greater than 3 J/g, and the melting enthalpy is measured in the range of 20°C-100°C of the first temperature-rise curve through the DSC measurement in accordance with DIN65467:1999.

2. The thermal insulation material according to claim 1, which is **characterized in that** the expanded perlite is derived from one or more of the following: perlite, retinite, and obsidian.

3. The thermal insulation material according to claim 1 or 2, which is **characterized in that** the expanded perlite at least meets one of the following characteristics:
i. volume-expansion coefficient of 4-50, measured in accordance to "JC/T 209-2012 Standard";
ii. density of 30 kg/m³-120 kg/m³, measured in accordance to "JC/T 209-2012 Standard";
iii. thermal conductivity of 20mW/mK-70mW/mK, further preferably 20mW/mK-60 mW/mK, most preferably 20 mW/mK-50 mW/mK, measured in accordance with GB /T 10294 or GB/T 10295;
iv. product hydrophobicity of not less than 95%, measured in accordance to GB/T 10299; and
v. closed porosity of less than10%, measured in accordance with JC/T 1042-2007 Appendix D.

4. The thermal insulation material according to any of claims 1-3, which is **characterized in that** said aqueous polyurethane dispersion is one or more of the following: an anionic aqueous polyurethane dispersion and a non-ionic aqueous polyurethane dispersion, most preferably an anionic aqueous polyurethane dispersion.

5. The thermal insulation material according to any of claims 1-4, which is **characterized in that** the expanded perlite at least meets one of the following characteristics:
I. particle size of 50 mesh-350 mesh, further preferably 50 mesh-200 mesh, most preferably 50 mesh-100 mesh, measured in accordance with GB T 3520-2008 graphite fineness test method; and
II. Expansion ratio of 50-500, and the expansion ratio is measured in accordance with GB 10698-1989.

6. The thermal insulation material according to any of claims 1-5, which is **characterized in that** the halogen-free flame retardant is a phosphorus-containing flame retardant, most preferably an ammonium polyphosphate.

7. The thermal insulation material according to any of claims 1-6, which is **characterized in that** the thermal insulation material at least meets one of the following characteristics:
A. density of 110kg/m³-200kg/m³, measured in accordance of GB/T 5486-2008;
B. thermal conductivity of 30-46 mW/mK, measured in accordance with GB/T 10294-2008; and
C. oxygen index of not less than 43, measured in accordance with GB/T2406.2-2009.

8. A process for preparing the thermal insulation material according to any of claims 1-7, which comprises mixing component a) expanded perlite, component b) aqueous polyurethane dispersion, component c) expandable graphite, component d) halogen-free flame retardant and component e) polysiloxane water repellent in any manner and drying to obtain the thermal insulation material.

9. An article, comprising the thermal insulation material according to any of claims 1-7.
